# FASCICULE DE BREVET EUROPEEN

(11) **EP 3 084 666 B1**
(45) Date de publication et mention de la délivrance du brevet: **28.11.2018**
(21) Numéro de dépôt: 14824840.4
(22) Date de dépôt: 19.12.2014
(51) Int. Cl.: G06F 21/00, H04L 9/00, H04L 29/06, H04L 12/801

(54) **DISPOSITIF D'INTERCONNEXION DE RÉSEAUX DE COMMUNICATION À SÉCURITÉ CONTRÔLÉE**
VORRICHTUNG ZUR VERBINDUNG VON KOMMUNIKATIONSNETZEN MIT KONTROLLIERTER SICHERHEIT
DEVICE FOR INTERCONNECTING COMMUNICATION NETWORKS WITH CONTROLLED SECURITY

(30) Priorité: 19.12.2013 FR 1363062
(43) Date de publication de la demande: 26.10.2016
(73) Titulaire: Safran Electronics & Defense, 92100 Boulogne-Billancourt (FR)
(72) Inventeur: COURTEILLE, Jean-Marie, 92100 Boulogne-Billancourt (FR)
(74) Mandataire: Regimbeau
(86) Numéro de dépôt international: PCT/EP2014/078907
(87) Numéro de publication internationale: WO 2015/092042

(56) Documents cités:
- FR-A1- 2 922 705
- US-A1- 2004 260 941
- US-A1- 2005 022 023

## Description

### DOMAINE TECHNIQUE GENERAL

L'invention concerne un dispositif d'interconnexion sécurisé permettant une communication bidirectionnelle entre deux réseaux de communication ; un premier réseau de sécurité élevée et un second réseau dont la sécurité est plus faible que le premier réseau. Un tel dispositif est notamment utilisable dans un réseau ETHERNET, réseau dans lequel transitent des trames ETHERNET.

### ETAT DE LA TECHNIQUE

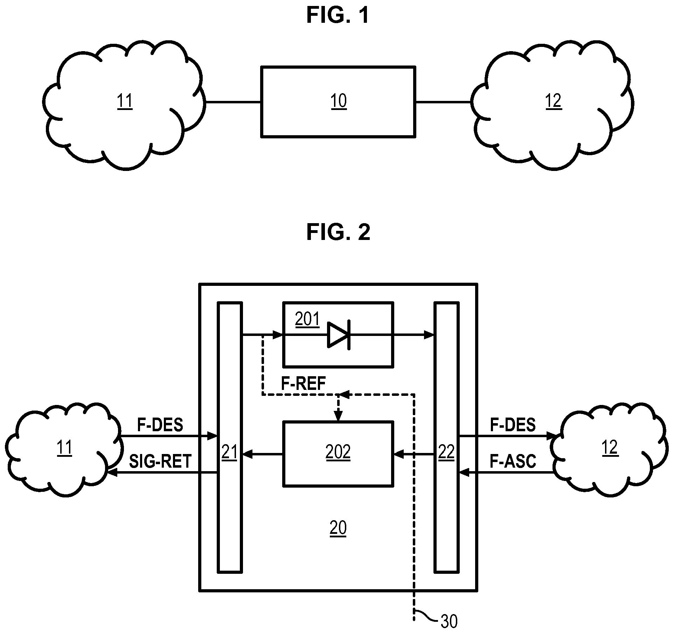

On a illustré sur la **figure 1** une architecture générale d'un système comprenant un dispositif d'interconnexion 10 permettant de connecter un premier réseau 11 à un second réseau 12. Les deux réseaux 11, 12 présentent des niveaux de sécurité différents.

On entend par réseau un réseau de communication proprement dit ainsi que l'ensemble des dispositifs connectés pouvant communiquer entre eux.

On entend par niveau de sécurité un ensemble de règles et contraintes de fonctionnement imposées au réseau pour s'assurer que seuls des flux de données autorisés peuvent transiter sur ce réseau.

Lorsque des réseaux ayant des niveaux de sécurité différents communiquent entre eux, il est nécessaire de s'assurer que le réseau de sécurité haute ne peut pas être corrompu par des attaques ou fonctionnements erratiques en provenance du réseau de sécurité basse.

Dans certains contextes nécessitant un haut niveau de sécurité, cette garantie doit être très forte, voire absolue.

Ceci est particulièrement nécessaire dans le contexte de l'avionique où le réseau de données reliant les appareils de commande de l'aéronef doit impérativement offrir un niveau de sécurité de très haut niveau surtout pendant les phases de vol.

Il est toutefois avantageux de connecter ce réseau de sécurité haute à un réseau de sécurité plus faible pour, entre autres, récupérer des données sur les différents paramètres du vol lors des phases de maintenance de l'aéronef.

Il est également avantageux de pouvoir fournir sur un réseau passager des informations en temps réel sur le vol pendant celui-ci.

Il est connu de construire des passerelles monodirectionnelles entre deux réseaux ayant des niveaux de sécurité différents. Dans ce cas, la passerelle autorise les transferts de données du réseau de sécurité haute vers le réseau de sécurité basse. Le côté monodirectionnel peut même être garanti au niveau physique de la communication, par exemple en utilisant une diode telle que décrite dans le document EP 1 533 947 B1.

Ce type de passerelle permet de garantir l'impossibilité de laisser passer des données en provenance du réseau de sécurité basse et de compromettre le réseau de sécurité haute.

Toutefois, pour permettre le fonctionnement de certaines applications, il peut s'avérer nécessaire de transmettre des informations en provenance du réseau de sécurité basse vers le réseau de sécurité haute. Il peut s'agir parfois de simples commandes.

Il est également avantageux de pouvoir disposer de mécanismes de contrôle de flux lors des transferts de données depuis le réseau de sécurité haute vers le réseau de sécurité basse. Le contrôle de flux nécessite de pouvoir remonter des informations vers la source du transfert et donc depuis le réseau de sécurité basse vers le réseau de sécurité haute.

Toutefois, il est souhaitable que le niveau de sécurité puisse être maintenu à un niveau très élevé. Il faut donc garantir un contrôle sur les informations remontant du réseau de sécurité basse vers le réseau de sécurité haute. Ce contrôle permet de garantir une sécurité de très haut niveau.

Il est classique de réaliser des passerelles à l'aide de pare-feu dans ce genre de situations. Ces pare-feu organisent un filtrage des données circulant sur la passerelle. Ces filtrages sont faits en fonction des protocoles de communication utilisés et des adresses et numéros de port impliqués dans la communication.

Toutefois, le niveau de sécurité apporté par un tel pare-feu n'est pas suffisant dans certains contextes où le besoin de sécurité est particulièrement élevé.

Il est avantageux de pouvoir élever le niveau de sécurité d'une telle passerelle pour pouvoir garantir un niveau de sécurité proche du niveau de sécurité apporté par une passerelle monodirectionnelle.

### PRESENTATION DE L'INVENTION

L'invention répond à ce besoin et propose selon un premier aspect un dispositif d'interconnexion d'au moins deux réseaux de communication de données, connectant un premier réseau qualifié de réseau de sécurité haute et au moins un second réseau qualifié de réseau basse, le dispositif comprenant
- une voie monodirectionnelle dite voie descendante entre le réseau de sécurité haute et le réseau de sécurité basse ;
- une voie monodirectionnelle dite voie ascendante entre le réseau de sécurité basse et le réseau de sécurité haute, la voie ascendante étant configurée pour, en fonction d'au moins un modèle de données prédéterminé à l'avance issu du réseau de sécurité basse ou d'un canal de chargement dédié, émettre un signal de retour vers le réseau de sécurité haute dès lors qu'un flux de données ascendant issu du réseau de sécurité basse vers le réseau de sécurité haute comprend tout ou partie du modèle de données prédéterminé, le signal de retour étant émis conjointement à une émission du flux de données ascendant ou à l'issue d'une émission du flux ascendant vers le réseau de sécurité haute.

L'invention est avantageusement complétée par les caractéristiques suivantes, prises seules ou en une quelconque de leur combinaison techniquement possible.

Le flux de données comprenant une succession de paquets de données, chaque paquet comprenant plusieurs champs de données, la voie ascendante est configurée pour mettre en oeuvre un étape de détection d'un ensemble de données conforme à un modèle de données de référence dans le flux de données ascendant issu du réseau de sécurité basse.

La voie ascendante est en outre configurée pour mettre en oeuvre une étape de déclenchement d'une émission d'un signal de retour vers le réseau de sécurité haute dès lors qu'un flux de données ascendant issu du réseau de sécurité basse vers le réseau de sécurité haute comprend tout ou partie du modèle de données prédéterminé.

Le modèle de données de référence appartient à un ensemble d'au moins un modèle de données de référence, chaque modèle de données de référence de l'ensemble correspondant à un flux de retour associé au modèle de données de référence détecté.

Le modèle de données de référence est de taille supérieure ou égale au flux de retour.

La voie ascendante est en outre configurée, pour mettre en oeuvre, une étape de construction d'un flux de retour à partir du flux de données issu du réseau de sécurité basse, la construction consistant à extraire une partie des données du flux de données ascendant, le flux de retour étant le signal ainsi construit.

La voie ascendante est configurée pour mettre en oeuvre une étape de construction d'un modèle de données de référence à partir d'un flux de données issu du réseau de sécurité haute.

La voie ascendante est configurée pour mettre en oeuvre une vérification de l'intégrité du flux de données ascendant.

La vérification de l'intégrité du flux de donnée est effectuée au fur et à mesure d'une émission dudit flux ascendant.

La voie ascendante est configurée pour si le flux ascendant n'est pas intègre, alors qu'une partie dudit flux ascendant est déjà reçue par le réseau de sécurité haute, insérer une indication dans une trame du flux ascendant indiquant que le flux ascendant n'est pas intègre.

Si le flux ascendant ne comporte pas d'insertion automatique d'un CRC, le réseau de sécurité basse est configuré pour élaborer un CRC de manière à ce que le flux ascendant à destination du réseau sécurisé soit intègre.

La voie descendante comprend un module qualifié pour garantir un caractère monodirectionnelle de ladite voie descendante ledit module étant de préférence une diode.

L'étape de construction d'un modèle de données de référence à partir d'un flux de données issu du réseau de sécurité haute est mise en oeuvre après les étapes suivantes :
détection dans le flux de données issu de réseau de sécurité haute d'un ensemble de données conforme à un flux de données d'initialisation ;
vérification de l'intégrité du flux de données ainsi détecté issu de réseau de sécurité haute ; et, construction du modèle de données de référence à partir du flux de données issu du réseau de sécurité haute ou à partir du canal de chargement dédié.

L'invention concerne également un ensemble comprenant une pluralité de dispositifs selon l'invention, comprenant un seul et même canal dédié pour amener le modèle de données de référence à chaque voie ascendante de chaque dispositif.

L'invention concerne en outre un ensemble comprenant une pluralité de dispositifs selon l'invention, disposés tête bêche et disposant de liaisons de configuration dédiées indépendantes des flux ascendants et descendants.

Selon un second aspect, l'invention concerne un ensemble comprenant une pluralité de dispositifs selon le premier aspect de l'invention, comprenant un seul et même canal dédié pour amener le modèle de données de référence à chaque voie ascendante de chaque dispositif.

Selon un troisième aspect, l'invention concerne un ensemble comprenant une pluralité de dispositifs selon le premier aspect de l'invention, disposés tête bêche et disposant de liaisons de configuration dédiées indépendantes des flux ascendants et descendants.

L'invention peut être implémentée par du hardware uniquement, c'est-à-dire sans processeur, la sécurité étant alors accrue puisqu'aucun software n'est requis. L'implémentation est maitrisée de bout en bout.

L'invention est notamment fondée sur l'émission d'un signal de retour précédé d'une étape de construction d'un signal de retour consécutivement à la reconnaissance d'un modèle de référence attendu au début de chaque paquet du flux de données ascendant.

En particulier, la construction du signal de retour est dynamique. Le signal de retour peut être constitué de données statiques et/ou de données issues directement du flux de données ascendant émis par le réseau de sécurité basse, la proportion de ces données étant flexibles afin de garantir le passage d'une pluralité de protocoles ou de s'adapter à différents niveaux de sécurités.

En conséquence, contrairement aux techniques de l'art antérieur notamment de celles décrites dans le document FR 2 922 705, il n'y a pas de passage de données par un canal interne bas débit dédié.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels outre la figure 1 déjà discutée :
- la figure 2 illustre schématiquement un dispositif d'interconnexion selon un premier aspect de l'invention ;
- la figure 3 illustre schématiquement un premier mode de réalisation d'un procédé de contrôle d'une transmission d'un flux de données dans un dispositif d'interconnexion selon l'invention ;
- la figure 4 illustre schématiquement un second mode de réalisation d'un procédé de contrôle d'une transmission d'un flux de données dans un dispositif d'interconnexion selon l'invention ;
- la figure 5 illustre schématiquement un troisième mode de réalisation d'un procédé de contrôle d'une transmission d'un flux de données dans un dispositif d'interconnexion selon l'invention ;
- la figure 6 illustre schématiquement un quatrième mode de réalisation d'un procédé de contrôle d'une transmission d'un flux de données dans un dispositif d'interconnexion selon l'invention ;
- la figure 7 illustre schématiquement un ensemble selon un second aspect de l'invention ;
- la figure 8 illustre schématiquement un ensemble selon un troisième aspect de l'invention.

Sur l'ensemble des figures les éléments similaires portent des références identiques.

### DESCRIPTION DETAILLEE DE L'INVENTION

On a illustré sur la **figure 2** un dispositif d'interconnexion 20 d'au moins deux réseaux de communication de données, connectant un premier réseau 11 qualifié de réseau de sécurité haute et au moins un second réseau 12 qualifié de réseau basse sécurité.

Un tel dispositif comprend en outre une première interface 21 de communication avec le réseau 11 de sécurité basse et une seconde interface 22 de communication avec le réseau 12 de sécurité haute.

Le dispositif d'interconnexion comprend en outre une voie descendante 201 par laquelle transite un flux de données descendant F-DES issu du réseau 11 de sécurité haute à destination du réseau 12 de sécurité basse.

Le dispositif d'interconnexion comprend également une voie ascendante 202 par laquelle transite un flux de données ascendant F-ASC qui peut déclencher l'envoi vers le réseau 11 de sécurité basse d'un signal de retour SIG-RET. Ce déclenchement peut être initié en fonction d'au moins une donnée du flux de données ascendant.

Les flux de données descendant, ascendant et le signal de retour SIG-RET sont de préférence constitués de données organisées selon des paquets au format ETHERNET ce qui implique qu'un CRC est automatiquement inséré dans les trames composant les différents flux.

Ainsi, la voie descendante 201 est configurée pour laisser passer l'ensemble du flux de données du réseau 11 de sécurité haute vers le réseau 12 de sécurité basse.

En particulier, la voie descendante comprend un module qualifié pour garantir un caractère monodirectionnel de la voie descendante. Un tel module est préférence assimilable à une fonction de type diode.

En outre, la voie ascendante 202 est configurée pour, en fonction d'au moins un modèle de données F-REF prédéterminé à l'avance (ci-après modèle de données de référence F-REF) issu du réseau 11 de sécurité haute ou d'un canal 30 de chargement dédié indépendant, émettre un signal de retour SIG-RET vers le réseau 11 de sécurité haute dès lors qu'un flux de données ascendant F-ASC issu du réseau de sécurité basse 12 vers le réseau de sécurité haute 11 comprend tout ou partie du modèle de données F-REF prédéterminé. Le signal de retour SIG-RET peut être émis en même temps que le flux ascendant F-ASC ou bien à l'issue de l'émission complète du flux ascendant F-ASC.

C'est sous certaines conditions particulières que va être déclenchée l'émission d'un signal de retour SIG-RET vers le réseau 12 de sécurité basse, conditions qui vont être décrites, ci-après, dans les modes de réalisation d'un procédé de contrôle d'une transmission d'un flux de données mis en oeuvre par la voie ascendante 202 configurée pour mettre en oeuvre les étapes décrites ci-après en relation avec chacun des modes de réalisation.

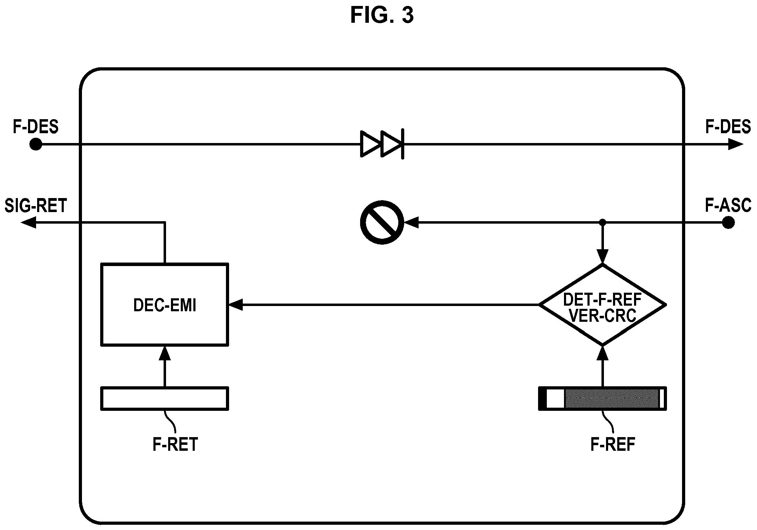

La **figure 3** illustre un premier mode de réalisation d'un procédé de contrôle d'une transmission d'un flux de données mis en oeuvre par la voie ascendante 202 du dispositif d'interconnexion de la figure 2.

Selon ce premier mode de réalisation, dans une première étape DET-F-REF on détecte dans le flux de données ascendant F-ASC issu du réseau 12 de sécurité basse à destination du réseau 11 de sécurité haute un ensemble de données conforme à un modèle de données de référence F-REF. Le modèle de données de référence F-REF peut provenir soit du réseau de sécurité haute ou soit d'un canal 30 dédié.

Ensuite, dans une seconde étape VER-CRC, on vérifie de manière standard l'intégrité du flux de données ascendant F-ASC pour éviter de propager un contenu dont l'intégrité ne serait pas correcte.

Ensuite, si un ensemble de données conforme à un modèle de référence F-REF est détecté et si le flux de données ascendant F-ASC est intègre, dans une troisième étape DEC-EMI on déclenche l'émission d'un signal de retour SIG-RET vers le réseau 11 de sécurité haute, le signal de retour SIG-RET étant un flux de données de retour F-RET prédéterminé.

Le signal de retour est dans ce premier mode de réalisation indépendant du flux descendant F-DES et du flux ascendant F-ASC.

En outre, ce flux de de données de retour F-RET est prédéterminé en ce qu'il est conforme à une suite de données pré-chargée dans une mémoire (non représentée) du dispositif d'interconnexion.

Le signal de retour SIG-RET est dans ce premier mode de réalisation émis à l'issue de l'émission du flux ascendant F-ASC.

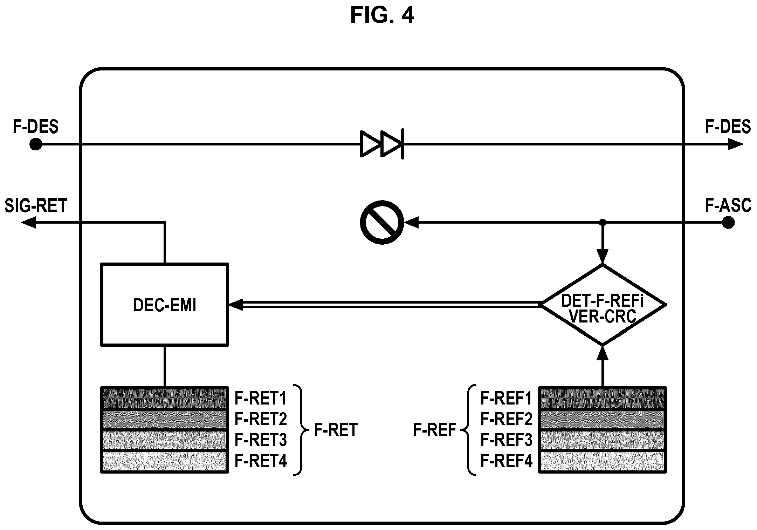

La **figure 4** illustre un second mode de réalisation, selon lequel, en plus des caractéristiques du premier mode de réalisation, le modèle de données de référence F-REF appartient à un ensemble de modèles de données de références F-REF1, F-REF2, F-REF3, F-REF4 de sorte qu'un modèle de données de référence parmi ces modèles de données de références est détecté DET-F-REFi avec i=1, 2, 3, 4 ou de manière plus générale i =1, ..., N, avec N le nombre de modèles de données de référence, et que c'est l'intégrité du modèle de données de référence F-REFi détecté qui est alors vérifié, détection et vérification déclenchant l'émission DEC-EMI d'un signal de retour SIG-RET qui est un flux de données F-RETi prédéterminé correspondant au modèle de données de référence détecté. Les modèle de données de référence F-REFi peuvent provenir soit du réseau de sécurité haute ou soit d'un canal 30 dédié.

Selon ce mode de réalisation, pour chaque flux de référence stocké un flux de retour F-RET prédéterminé est stocké.

Pour chacun des premier et second modes de réalisation ci-dessus décrits le modèle de référence est de taille supérieure ou égale au flux de retour F-RET ce qui entraine intrinsèquement une réduction de débit le long de la voie ascendante.

De manière complémentaire, la voie ascendante 202 peut comprendre un réducteur de débit (non représenté) qui permet de limiter le nombre de paquets émis par unité de temps sur la voie ascendante et notamment ceux du signal de retour SIG-RET. Une telle réduction de débit peut être mise en oeuvre au moyen d'un dispositif monostable, un dispositif de décimation ou bien encore une fenêtre glissante.

La limitation de débit ainsi obtenue présente l'avantage que le premier réseau 11 de sécurité haute ne sera pas sollicité au-delà d'une charge prédéterminée.

Le signal de retour SIG-RET est dans ce second mode de réalisation émis à l'issue de l'émission du flux ascendant F-ASC.

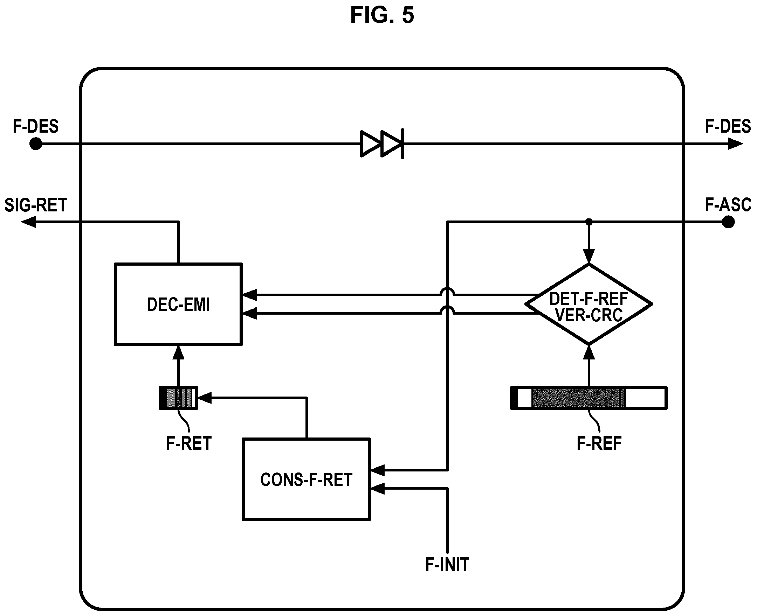

La **figure 5** illustre un troisième mode de réalisation comprenant une étape de construction CONS-F-RET- du flux de retour F-RET à partir du flux de données ascendant issu du réseau 12 de sécurité basse, la construction consistant à extraire une partie des données du flux de données ascendant, le signal de retour SIG-RET étant le signal ainsi construit.

En outre, comme dans les premier et second modes de résiliation, le procédé comprend une étape DET-F-REF selon laquelle on détecte dans le flux de données ascendant F-ASC issu du réseau 12 de sécurité basse à destination du réseau 11 de sécurité haute un ensemble de données conforme à un modèle de données de référence F-REF. Le modèle de données de référence F-REF peut provenir soit du réseau de sécurité haute ou soit d'un canal 30 dédié.

Et si un ensemble de données conforme à un modèle de référence est détecté, on déclenche l'émission du signal de retour SIG-RET vers le réseau de sécurité haute 11.

Le flux de retour F-RET et donc le signal de retour SIG-RET comprend des données issues du flux ascendant et des données prédéterminées F-INIT à l'avance. En conséquence, le flux de retour comprend à la fois des données statiques et dynamiques (puisqu'elles dépendent des données du flux ascendant qui peuvent être différents d'un flux à l'autre).

Selon ce mode de réalisation, le signal de retour SIG-RET peut être émis après réception complète du flux ascendant F-ASC ou bien conjointement à l'émission du flux ascendant.

De manière plus précise le modèle de données de référence F-REF comporte un ensemble d'information définissant octet par octet la manière d'élaborer à la volée (tel une partition) le flux de retour F-RET à partir du flux ascendant F-ASC. Il indique ainsi de placer sur le flux de retour F-RET :
- soit une donnée statique F-INIT qui est un sous ensemble du modèle de données de référence F-REF ;
- soit une donnée issue du flux ascendant F-ASC, laquelle est en outre masquable bit à bit afin de choisir finement l'étendue de ce qui sera autorisé à remonter du réseau non sécurisé 12 vers le réseau sécurisé 11 ;
- soit une insertion automatique, ou non, d'un mot de contrôle d'intégrité CRC en fin de trame portant sur le flux ainsi élaboré à la volée.

Selon ce mode de réalisation et dans le cas d'une émission conjointe du flux ascendant F-ASC et du signal de retour SIF-RET, le CRC est calculé au fur et à mesure de l'émission du flux ascendant F-ASC et la vérification VER-CRC de l'intégrité du flux est effectuée à la volée. Si le flux vérifié n'est pas intègre, alors qu'une partie est reçue, un CRC indiquant une non intégrité du flux va être inséré dans la trame en cours d'émission du flux ascendant afin d'indiquer au réseau de sécurité haute que le flux reçu n'est pas intègre.

De manière avantageuse, si l'ajout du CRC automatique est désactivé et que l'emplacement correspondant est attribué au flux ascendant F-ASC, le réseau non sécurisé 12 aura ainsi la charge d'élaborer une valeur correcte de CRC portant sur l'ensemble du flux de retour F-RET élaboré dynamiquement. A cette fin, il faut que le réseau non sécurisé 12 dispose de la connaissance complète du signal de retour F-RET et des données statiques F-INIT correspondants. En l'absence de ces informations il sera impossible au réseau non sécurisé 12 de soumettre un flux ascendant F-ASC valide au réseau sécurisé 11.

De manière complémentaire, comme dans le second mode de réalisation illustré sur la figure 4, le modèle de données de référence F-REF peut appartenir à un ensemble de modèles de données de références F-REF1, F-REF2, F-REF3, F-REF4 (non représentés), les flux de retour F-RETi comprennent en outre des données prédéterminées F-INITi à l'avance, un modèle de données de référence F-REF de l'ensemble de modèles de données de références.

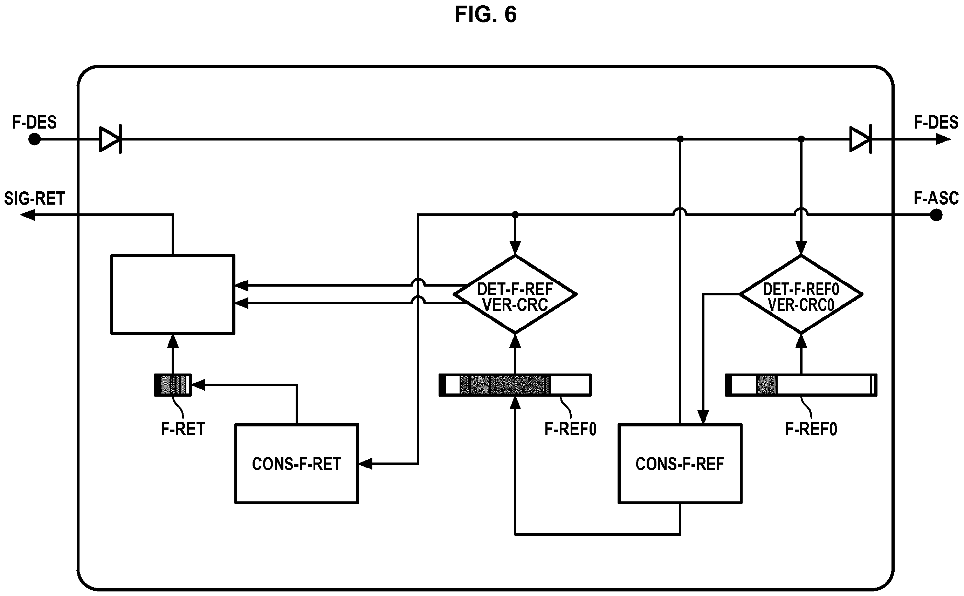

La **figure 6** illustre un quatrième mode de réalisation conforme au troisième mode de réalisation mais dans lequel la voie ascendante 202 est configurée pour, en outre, mettre en oeuvre une étape de construction CONS-F-REF d'un modèle de données de référence à partir, ici, du flux de données issu du réseau 11 de sécurité haute.

De manière avantageuse et complémentaire, l'étape de construction CONS-F-REF du flux de référence à partir d'un flux de données issu du réseau 11 de sécurité haute est mise en oeuvre après les étapes suivantes :
détection dans le flux de données issu de réseau de sécurité haute d'un ensemble de données conforme à un flux de données de référence initial F-REFO ;
vérification, de type connu, VER-CRCO de l'intégrité du flux de données de référence initial ainsi détecté issu de réseau de sécurité haute.

Comme on peut le voir sur la figure 6, L'étape de construction CONS-F-REF du flux de référence est mise en oeuvre si et seulement si le flux de données de référence F-REFO est intègre c'est-à-dire avec un CRC correct.

De manière complémentaire, il est possible conformément à ce quatrième mode de réalisation de construire plusieurs flux de références, et comme pour le premier mode de réalisation, le flux de retour appartient à un ensemble de plusieurs flux de retours, un flux de retour correspondant à un flux de référence.

Les modèle de données de référence F-REFi peuvent provenir soit du réseau de sécurité haute ou soit d'un canal 30 dédié.

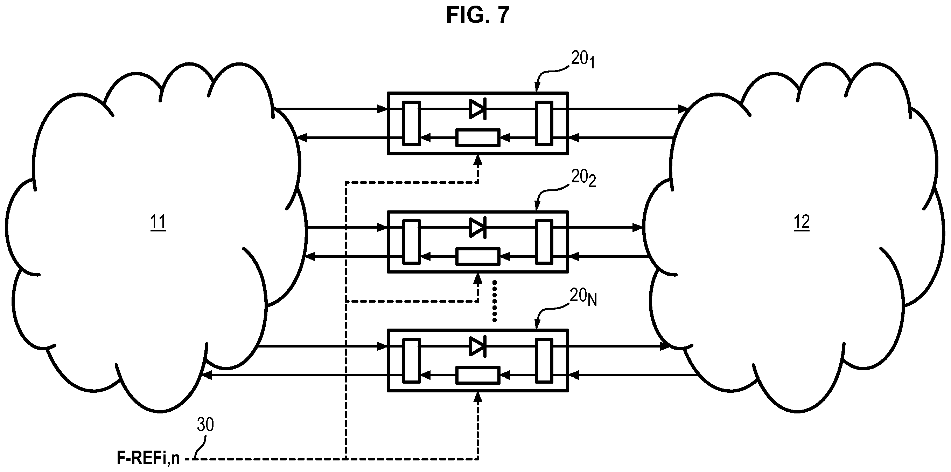

La **figure 7** illustre, selon un second aspect, un ensemble de dispositifs d'interconnexion conformes au premier aspect de l'invention et fonctionnant selon les premier, second ou encore troisième modes de réalisation agrégés de manière telle qu'un seul et même canal 30 dédié alimente chaque disposition d'interconnexion 20₁, 20₂, 20_{N} avec des modèles de données de référence F-REFi,n avec n=1, N et i l'indice du modèle de données de référence.

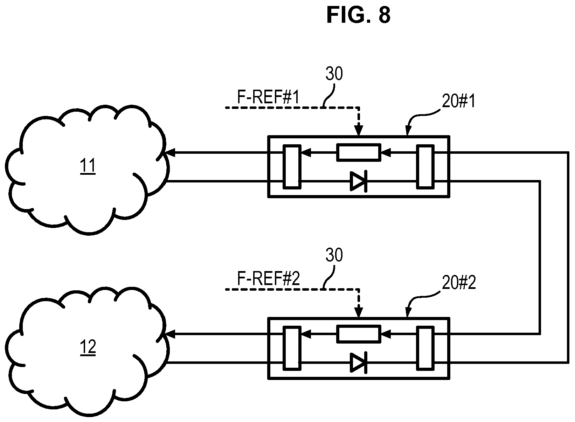

La **figure 8** illustre, selon un troisième aspect de réalisation, un ensemble de deux dispositifs d'interconnexion 20#1, 20#2 conformes au premier aspect de l'invention fonctionnant selon un procédé conforme aux premier, second ou encore troisième modes de réalisation disposés l'un par rapport à l'autre tête bêche. Selon ce mode de réalisation, l'accès d'une part au réseau de sécurité haute 11 et d'autre part de sécurité basse 12 est contrôlé par des voies ascendantes et descendantes décrites précédemment. Chaque dispositif 20#1, 20#2 comprend en outre un canal 30 dédié pour amener des modèles de données de références F-REFi#1, F-REFi#2. Avec une telle configuration, on obtient un ensemble offrant une sécurité contrôlée indépendamment dans chaque sens.

## Revendications

1. Dispositif d'interconnexion (20) d'au moins deux réseaux de communication de données, connectant un premier réseau (11) qualifié de réseau de sécurité haute et au moins un second réseau (12) qualifié de réseau de sécurité basse, le dispositif comprenant
- une voie monodirectionnelle (201) dite voie descendante entre le réseau de sécurité haute et le réseau de sécurité basse, ladite voie descendante (201) comprenant un module qualifié pour garantir un caractère monodirectionnel de ladite voie descendante, ledit module étant de préférence une diode ;
- une voie monodirectionnelle (202) dite voie ascendante entre le réseau (12) de sécurité basse et le réseau (11) de sécurité haute, la voie ascendante (202) étant configurée pour, en fonction d'au moins un modèle de données prédéterminé à l'avance issu du réseau de sécurité basse (12) ou d'un canal (30) de chargement dédié, émettre un signal de retour (SIG-RET) vers le réseau (11) de sécurité haute dès lors qu'un flux de données ascendant (F-ASC) issu du réseau de sécurité basse (12) vers le réseau de sécurité haute (11) comprend tout ou partie du modèle de données prédéterminé, le signal de retour (SIG-RET) étant émis conjointement à une émission du flux de données ascendant (F-ASC) ou à l'issue d'une émission du flux ascendant (F-ASC) vers le réseau de sécurité haute (11), le signal de retour (SIG-RET) comprenant des données prédéterminées à l'avance indépendantes des données du flux ascendant (F-ASC).

2. Dispositif d'interconnexion selon la revendication 1, dans lequel, le flux de données comprenant une succession de paquets de données, chaque paquet comprenant plusieurs champs de données, la voie ascendante est configurée pour mettre en oeuvre une étape de détection (DET-F-REF, DET-F-REFi) d'un ensemble de données conforme à un modèle de données de référence dans le flux de données ascendant issu du réseau (12) de sécurité basse.

3. Dispositif d'interconnexion selon la revendication 2, dans lequel la voie ascendante est en outre configurée pour mettre en oeuvre une étape de déclenchement (DEC-EMI) d'une émission (F-RET, F-RETi) d'un signal de retour (SIG-RET) vers le réseau (11) de sécurité haute dès lors qu'un flux de données ascendant (F-ASC) issu du réseau de sécurité basse (12) vers le réseau de sécurité haute (11) comprend tout ou partie du modèle de données prédéterminé, les données du signal de retour (SIG-RET) étant indépendantes du flux de données ascendant (F-ASC).

4. Dispositif d'interconnexion selon l'une des revendications 2 à 3, dans lequel le modèle de données de référence appartient à un ensemble d'au moins un modèle de données de référence, chaque modèle de données de référence de l'ensemble correspondant à un flux de retour associé au modèle de données de référence détecté.

5. Dispositif d'interconnexion selon l'une des revendications 2 à 4, dans lequel le modèle de données de référence est de taille supérieure ou égale au flux de retour.

6. Dispositif selon la revendication 2, dans lequel la voie ascendante est en outre configurée, pour mettre en oeuvre, une étape de construction (CONS-F-RET) d'un flux de retour à partir du flux de données issu du réseau (12) de sécurité basse, la construction consistant à extraire une partie des données du flux de données ascendant, le flux de retour comprenant les données extraites du flux ascendant, ainsi que des données (F-INIT) prédéterminées à l'avance indépendantes des données du flux de données ascendant.

7. Dispositif selon l'une des revendications 1 à 6, dans lequel la voie ascendante est configurée pour mettre en oeuvre une étape de construction (CONS-F-REF) d'un modèle de données de référence à partir d'un flux de données issu du réseau (11) de sécurité haute.

8. Dispositif d'interconnexion selon l'une des revendications précédentes, dans lequel la voie ascendante est configurée pour mettre en oeuvre une vérification (VER-CRC) de l'intégrité du flux de données ascendant (F-ASC).

9. Dispositif d'interconnexion selon la revendication 8, dans lequel la voie ascendante est configurée pour si le flux ascendant n'est pas intègre, alors qu'une partie dudit flux ascendant (F-ASC) est émise vers le réseau de sécurité haute (11), insérer une indication dans une trame du flux ascendant indiquant que le flux ascendant n'est pas intègre.

10. Dispositif d'interconnexion selon l'une des revendications 1 à 7, dans lequel si le flux ascendant ne comporte pas d'insertion automatique d'un CRC, le réseau de sécurité basse (12) est configuré pour élaborer un CRC de manière à ce que le flux ascendant (F-ASC) à destination du réseau sécurisé (12) soit intègre.

11. Dispositif selon l'une des revendications 6 à 10, dans lequel l'étape de construction (CONS-F-REF) d'un modèle de données de référence à partir d'un flux de données issu du réseau (11) de sécurité haute est mise en oeuvre après les étapes suivantes :
détection dans le flux de données issu de réseau de sécurité haute d'un ensemble de données conforme à un flux de données d'initialisation (F-REFO) ;
vérification (VER-CRCO) de l'intégrité du flux de données ainsi détecté issu de réseau de sécurité haute ; et, construction du modèle de données de référence à partir du flux de données issu du réseau (11) de sécurité haute ou à partir du canal (30) de chargement dédié.

12. Ensemble comprenant une pluralité de dispositifs selon l'une des revendications 1 à 11, comprenant un seul et même canal (30) dédié pour amener le modèle de données de référence à chaque voie ascendante de chaque dispositif.

13. Ensemble comprenant une pluralité de dispositifs selon l'une des revendications 1 à 11 disposés (20#1, 20#2) tête bêche et disposant de liaisons de configuration dédiées indépendantes des flux ascendants et descendants.

## Patentansprüche

1. Verbindungsvorrichtung (20) von mindestens zwei Datenkommunikationsnetzen, die ein erstes Netz (11), qualifiziert als Netz hoher Sicherheit, und mindestens ein zweites Netz (12), qualifiziert als Netz niedriger Sicherheit, verbindet, wobei die Vorrichtung umfasst
- einen eindirektionalen Weg (201), bezeichnet als absteigender Weg, zwischen dem Netz hoher Sicherheit und dem Netz niedriger Sicherheit, wobei der absteigende Weg (201) ein Modul umfasst, das qualifiziert ist, um dem absteigenden Weg einen eindirektionalen Charakter zu garantieren, wobei das Modul vorzugsweise eine Diode ist;
- einen eindirektionalen Weg (202), bezeichnet als aufsteigender Weg, zwischen dem Netz (12) niedriger Sicherheit und dem Netz (11) hoher Sicherheit, wobei der aufsteigende Weg (202) konfiguriert ist, um in Abhängigkeit von mindestens einem zuvor vorher festgelegten Datenmodell aus dem Netz niedriger Sicherheit (12) oder einem speziellen Ladekanal (30) ein Rücksignal (SIG-RET) an das Netz (11) hoher Sicherheit zu senden, sobald ein aufsteigender Datenstrom (F-ASC) aus dem Netz niedriger Sicherheit (12) in Richtung des Netzes hoher Sicherheit (11) das gesamte oder einen Teil des vorher festgelegten Datenmodells umfasst, wobei das Rücksignal (SIG-RET) gemeinsam mit einer Sendung des aufsteigenden Datenstroms (F-ASC) oder nach einer Sendung des aufsteigenden Stroms (F-ASC) in Richtung des Netzes hoher Sicherheit (11) gesendet wird, wobei das Rücksignal (SIG-RET) zuvor vorher festgelegte Daten umfasst, die von den Daten des aufsteigenden Stroms (F-ASC) unabhängig sind.

2. Verbindungsvorrichtung nach Anspruch 1, wobei der Datenstrom eine Abfolge von Datenpaketen umfasst, wobei jedes Paket mehrere Datenfelder umfasst, der aufsteigende Weg konfiguriert ist, um einen Detektionsschritt (DET-F-REF, DET-F-REFi) einer Einheit von Daten durchzuführen, die einem Referenzdatenmodell im aufsteigenden Datenstrom aus dem Netz (12) niedriger Sicherheit entspricht.

3. Verbindungsvorrichtung nach Anspruch 2, wobei der aufsteigende Weg ferner konfiguriert ist, um einen Auslöseschritt (DEC-EMI) einer Sendung (F-RET, F-RETi) eines Rücksignals (SIG-RET) in Richtung des Netzes (11) hoher Sicherheit durchzuführen, sobald ein aufsteigender Datenstrom (F-ASC) aus dem Netz niedriger Sicherheit (12) in Richtung des Netzes hoher Sicherheit (11) das gesamte oder einen Teil des vorher festgelegten Datenmodells umfasst, wobei die Daten des Rücksignals (SIG-RET) vom aufsteigenden Datenstrom (F-ASC) unabhängig sind.

4. Verbindungsvorrichtung nach einem der Ansprüche 2 bis 3, wobei das Referenzdatenmodell zu einer Einheit aus mindestens einem Referenzdatenmodell gehört, wobei jedes Referenzdatenmodell der Einheit einem Rückstrom entspricht, der dem detektierten Referenzdatenmodell zugeordnet ist.

5. Verbindungsvorrichtung nach einem der Ansprüche 2 bis 4, wobei das Referenzdatenmodell eine größere oder dieselbe Größe wie der Rückstrom hat.

6. Vorrichtung nach Anspruch 2, wobei der aufsteigende Weg ferner konfiguriert ist, um einen Konstruktionsschritt (CONS-F-RET) eines Rückstroms auf der Basis des Datenstroms aus dem Netz (12) niedriger Sicherheit durchzuführen, wobei die Konstruktion darin besteht, einen Teil der Daten des aufsteigenden Datenstroms zu extrahieren, wobei der Rückstrom die aus dem aufsteigenden Strom extrahierten Daten umfasst, sowie zuvor vorher festgelegte Daten (F-INIT), die von den Daten des aufsteigenden Datenstroms unabhängig sind.

7. Vorrichtung nach einem der Ansprüche 1 bis 6, wobei der aufsteigende Weg konfiguriert ist, um einen Konstruktionsschritt (CONS-F-REF) eines Referenzdatenmodells auf der Basis eines Datenstroms aus dem Netz (11) hoher Sicherheit durchzuführen.

8. Verbindungsvorrichtung nach einem der vorangehenden Ansprüche, wobei der aufsteigende Weg konfiguriert ist, um eine Überprüfung (VER-CRC) der Integrität des aufsteigenden Datenstroms (F-ASC) durchzuführen.

9. Verbindungsvorrichtung nach Anspruch 8, wobei der aufsteigender Weg konfiguriert ist, um, wenn der aufsteigende Strom keine Integrität besitzt, obwohl ein Teil des aufsteigenden Stroms (F-ASC) in Richtung des Netzes hoher Sicherheit (11) gesendet wird, einen Hinweis in einen Rahmen des aufsteigenden Stroms einzufügen, der darauf hinweist, dass der aufsteigende Strom keine Integrität besitzt.

10. Verbindungsvorrichtung nach einem der Ansprüche 1 bis 7, wobei, wenn der aufsteigende Strom keine automatische Einfügung eines CRC aufweist, das Netz niedriger Sicherheit (12) konfiguriert ist, um ein CRC derart zu erstellen, dass der aufsteigende Strom (F-ASC) in Richtung des abgesicherten Netzes (12) Integrität besitzt.

11. Vorrichtung nach einem der Ansprüche 6 bis 10, wobei der Konstruktionsschritt (CONS-F-REF) eines Referenzdatenmodells auf der Basis eines Datenstroms aus dem Netz (11) hoher Sicherheit nach den folgenden Schritten durchgeführt wird:
Detektieren, in dem Datenstrom aus dem Netz hoher Sicherheit, einer Einheit von Daten, die einem Initialisierungs-Datenstrom (F-REFO) entspricht;
Überprüfen (VER-CRCO) der Integrität des derart detektierten Datenstroms aus dem Netz hoher Sicherheit; und, Konstruieren des Referenzdatenmodells auf der Basis des Datenstroms aus dem Netz (11) hoher Sicherheit oder auf der Basis eines speziellen Ladekanals (30).

12. Einheit, umfassend eine Vielzahl von Vorrichtungen nach einem der Ansprüche 1 bis 11, umfassend einen einzigen und gleichen Kanal (30), der darauf spezialisiert ist, das Referenzdatenmodell jedem aufsteigenden Weg jeder Vorrichtung zuzuführen.

13. Einheit, umfassend eine Vielzahl von Vorrichtungen nach einem der Ansprüche 1 bis 11, die Kopf-an-Fuß angeordnet sind (20#1, 20#2) und über spezielle Konfigurationsverbindungen verfügen, die von dem aufsteigenden und absteigenden Strom unabhängig sind.

## Claims

1. An interconnection device (20) of at least two data communication networks, connecting a first network (11) qualified as high-security network and at least one second network (12) qualified as low-security network, the device comprising
- a one-way channel (201) known as downlink channel between the high-security network and the low-security network, said downlink channel (201) comprising a module qualified to guarantee a one-way character of said downlink channel, said module preferably being a diode;
- a one-way channel (202) known as uplink channel between the low-security network (12) and the high-security network (11), the uplink channel (202) being configured, as a function of at least one data model predetermined in advance originating from the low-security network (12) or a dedicated loading channel (30), to transmit a return signal (SIG-RET) to the high-security network (11) when an uplink data stream (F-ASC) originating from the low-security network (12) to the high-security network (11) comprises all or part of the predetermined data model, the return signal (SIG-RET) being transmitted jointly to transmission of the uplink data stream (F-ASC) or on completion of transmission of the uplink stream (F-ASC) to the high-security network (11), the return signal (SIG-RET) comprising data predetermined in advance independent of the data from the uplink stream (F-ASC).

2. The interconnection device according to claim 1, wherein the data stream comprising a succession of data packets, each packet comprising several data fields, the uplink channel is configured to perform a detection step (DET-F-REF, DET-F-REFi) of a set of data in conformity with a reference data model in the uplink data stream originating from the low-security network (12) .

3. The interconnection device according to claim 2, wherein the uplink channel is further configured to perform a triggering step (DEC-EMI) of transmission (F-RET, F-RETi) of a return signal (SIG-RET) to the high-security network (11) when an uplink data stream (F-ASC) originating from the low-security network (12) to the high-security network (11) comprises all or part of the predetermined data model, the data from the return signal (SIG-RET) being independent of the uplink data stream (F-ASC).

4. The interconnection device according to one of claims 2 to 3, wherein the reference data model belongs to a set of at least one reference data model, each reference data model of the set corresponding to a return stream associated with the detected reference data model.

5. The interconnection device according to one of claims 2 to 4, wherein the reference data model is of a size greater than or equal to the return stream.

6. The device according to claim 2, wherein the uplink channel is further configured to perform a construction step (CONS-F-RET) of a return stream from the data stream originating from the low-security network (12), the construction consisting of extracting some of the data from the uplink data stream, the return stream comprising the data extracted from the uplink stream, as well as data (F-INIT) predetermined in advance independent of the data from the uplink data stream.

7. The device according to one of claims 1 to 6, wherein the uplink channel is configured to perform a construction step (CONS-F-REF) of a reference data model from a data stream originating from the high-security network (11).

8. The interconnection device according to one of the preceding claims, wherein the uplink channel is configured to perform verification (VER-CRC) of integrity of the uplink data stream (F-ASC).

9. The interconnection device according to claim 8, wherein the uplink channel is configured, if the uplink stream is not integral, while part of said uplink stream (F-ASC) is transmitted to the high-security network (11), for inserting an indication in a frame of the uplink stream indicating that the uplink stream is not integral.

10. The interconnection device according to one of claims 1 to 7, wherein if the uplink stream does not include automatic insertion of a CRC, the low-security network (12) is configured to formulate a CRC such that the uplink stream (F-ASC) intended for the secure network (12) is integral.

11. The device according to one of claims 6 to 10, wherein the construction step (CONS-F-REF) of a reference data model from a data stream originating from the high-security network (11) is performed after the following steps:
detection in the data stream originating from the high-security network of a set of data in conformity with an initialization data stream (F-REF0);
verification (VER-CRCO) of integrity of the data stream detected in this way originating from the high-security network; and, construction of the reference data model from the data stream originating from the high-security network (11) or from the dedicated loading channel (30).

12. An assembly comprising a plurality of devices according to one of claims 1 to 11, comprising one and the same dedicated channel (30) for guiding the reference data model to each uplink channel of each device.

13. The assembly comprising a plurality of devices according to one of claims 1 to 11, arranged (20#1, 20#2) head to tail and having dedicated configuration links independent of the uplink and downlink streams.
